(19) Europäisches Patentamt
European Patent Office
Office européen des brevets

(11) **EP 4 624 998 A2**

(12) **EUROPEAN PATENT APPLICATION**

(43) Date of publication:
**01.10.2025 Bulletin 2025/40**

(21) Application number: **25150936.0**

(22) Date of filing: **09.01.2025**

(51) International Patent Classification (IPC):
***G01S 19/14*** *(2010.01)* ***G01S 19/21*** *(2010.01)*

(52) Cooperative Patent Classification (CPC):
**G01S 19/215; G01S 19/14**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **27.03.2024 US 202463570482 P**
**21.06.2024 US 202418749889**

(71) Applicant: **Honeywell International Inc.**
**Charlotte, NC 28202 (US)**

(72) Inventors:
- **QUEEN II, Jerry J.**
  **Charlotte, 28202 (US)**
- **MAY, Reed R**
  **Charlotte, 28202 (US)**
- **VARGAS, Nestor**
  **Charlotte, 28202 (US)**
- **KREICHAUF, Ruth Dagmar**
  **Charlotte, 28202 (US)**

(74) Representative: **Haseltine Lake Kempner LLP**
**Cheapside House**
**138 Cheapside**
**London EC2V 6BJ (GB)**

# (54) GNSS/INS NAVIGATION ASSURANCE USING CHIP-SCALE ATOMIC CLOCK

(57) In one example, a method includes receiving, from a CSAC, an indication of a difference between a phase of a GNSS 1PPS signal output by a GNSS receiver and a phase of a CSAC 1PPS signal. The method includes determining, with a Kalman filter, a phase error estimate and a frequency error estimate for the CSAC based on the difference between the phase of a GNSS 1PPS signal output by the GNSS receiver and the phase of the CSAC 1PPS signal. The method includes disciplining, with the Kalman filter, the CSAC using coarse synchronization commands and fine steer commands, wherein the coarse synchronization commands and the fine steer commands are based on the phase error estimate and the frequency error estimate for the CSAC. The method includes detecting GNSS spoofing based on the difference between the phase of the GNSS 1PPS signal and the phase of the CSAC 1PPS signal.

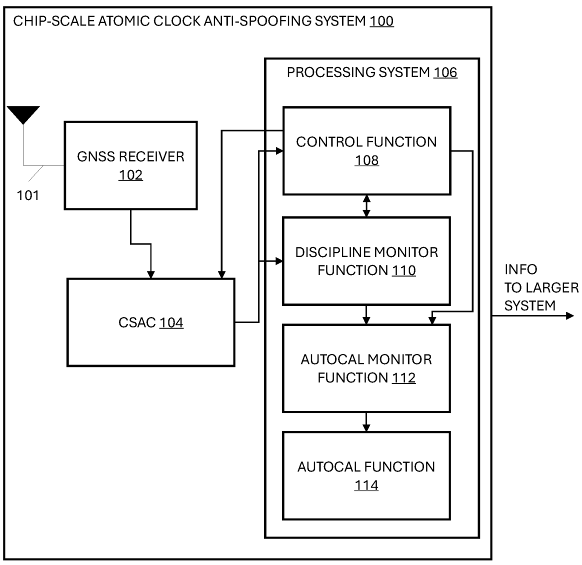


**FIG. 1**



Processed by Luminess, 75001 PARIS (FR)

## Description

STATEMENT REGARDING FEDERALLY SPONSORED RESEARCH OR DEVELOPMENT

This invention was made with Government support. The Government has certain rights in the invention.

CROSS-REFERENCE TO RELATED APPLICATIONS

This application claims priority to U.S. Provisional Application No. 63/570,482, filed on March 27, 2024, and titled "GNSS/INS NAVIGATION ASSURANCE USING CHIP-SCALE ATOMIC CLOCK," the contents of which are incorporated by reference herein in their entirety.

BACKGROUND

In an increasingly globalized economy, aircraft serve as the conduit for facilitating global commerce. Vehicles can transport cargo and passengers across vast distances and many actors (people, businesses, governments, airports) depend on timely vehicle travel. In order to safely navigate through various environments and coordinate effective travel routines, vehicles rely on Global Navigation Satellite System (GNSS) aided navigation technology. These systems facilitate fast and accurate determination of position information, such as lateral position and altitude, and time information to the vehicle via a GNSS receiver.

However, relying on GNSS technology does not come without risks. GNSS aided navigation solutions are subject to many types of GNSS threats that affect the Position, Velocity, and Time (PVT) solution generated by the navigation system. These threats can change the GNSS receiver's estimate of position and, while doing so, also change the GNSS receiver's estimate of time.

For instance, false signals can be fed to a GNSS receiver instead of the true signals sent by GNSS satellites. As a result, the manipulated signals convey incorrect position or time information (for example, a false position solution or an incorrect clock offset) to the GNSS receiver, which may lead to the vehicle incorporating false information in its navigation aids. Adverse reliance on these "spoofed" signals can lead to a wide variety of serious and potentially deadly consequences, most notably the high risk of crash.

The above phenomenon is known as GNSS spoofing. Left unchecked, GNSS spoofing has the potential to jeopardize confidence in the safe navigation of vehicles, particularly for aircraft travel. GNSS spoofing means the manipulation of GNSS signals before acquisition by a GNSS receiver so that the GNSS receiver determines an incorrect three-dimensional location and/or time. Recently, there has been an increase in documented or suspected instances of GNSS spoofing. Without means for detecting when GNSS signals have been spoofed, a vehicle using GNSS technology incurs a serious risk of losing personnel, goods, or the vehicle itself.

SUMMARY

In some aspects, a system is described herein. The system includes a Global Navigation Satellite System (GNSS) receiver configured to be coupled to an antenna. The GNSS receiver is configured to receive GNSS signals from GNSS satellites via the antenna and to output a GNSS 1PPS signal. The system further includes a chip-scale atomic clock configured to output a chip-scale atomic clock 1PPS signal and to determine a difference between a phase of the GNSS 1PPS signal and a phase of the chip-scale atomic clock 1PPS signal. The system further includes at least one processor communicatively coupled to the chip-scale atomic clock. The at least one processor is configured to receive the difference between the phase of the GNSS 1PPS signal and the phase of the chip-scale atomic clock 1PPS signal. The at least one processor is further configured to implement a Kalman filter configured to determine a phase error estimate for the chip-scale atomic clock and a frequency error estimate for the chip-scale atomic clock based on the difference between the phase of the GNSS 1PPS signal and the phase of the chip-scale atomic clock 1PPS signal. The at least one processor is further configured to discipline, with the Kalman filter, the chip-scale atomic clock using coarse synchronization commands and fine steer commands that are based on the phase error estimate for the chip-scale atomic clock and the frequency error estimate for the chip-scale atomic clock. The at least one processor is further configured to detect GNSS spoofing based on the difference between the phase of the GNSS 1PPS signal and the phase of the chip-scale atomic clock 1PPS signal.

In some aspects, a method is described herein. The method includes receiving, from a chip-scale atomic clock, an indication of a difference between a phase of a Global Navigation Satellite System (GNSS) 1PPS signal output by a GNSS receiver and a phase of a chip-scale atomic clock 1PPS signal. The method further includes determining, with a Kalman filter, a phase error estimate for the chip-scale atomic clock and a frequency error estimate for the chip-scale atomic clock based on the difference between the phase of a GNSS 1PPS signal output by the GNSS receiver and the phase of the chip-scale atomic clock 1PPS signal. The method further includes disciplining, with the Kalman filter, the chip-scale atomic clock using coarse synchronization commands and fine steer commands, wherein the coarse synchronization commands and the fine steer commands are based on the phase error estimate for the chip-scale atomic clock and the frequency error estimate for the chip-scale atomic clock. The method further includes detecting GNSS spoofing based on the difference between the phase of the GNSS 1PPS signal and the phase of the chip-scale atomic clock 1PPS signal.

In some aspects, a processing system is described herein. The processing system includes one or more processors and a memory storing instructions. The instructions, when executed by one or more processors, cause the one or more processors to implement a Kalman filter configured to determine a phase error estimate for a chip-scale atomic clock and a frequency error estimate for the chip-scale atomic clock based on a difference between a phase of a Global Navigation Satellite System (GNSS) 1PPS signal output by a GNSS receiver and a phase of a chip-scale atomic clock 1PPS signal. The instructions, when executed by one or more processors, cause the one or more processors to discipline the chip-scale atomic clock using a coarse synchronization command and a fine steer command that are based on the phase error estimate for the chip-scale atomic clock and the frequency error estimate for the chip-scale atomic clock. The instructions, when executed by one or more processors, cause the one or more processors to detect GNSS spoofing based on the difference between the phase of the GNSS 1PPS signal and the phase of the chip-scale atomic clock 1PPS signal.

## BRIEF DESCRIPTION OF THE DRAWINGS

Understanding that the drawings depict only some embodiments and are not therefore to be considered limiting in scope, the exemplary embodiments will be described with additional specificity and detail using the accompanying drawings, in which:

FIG. 1 is a block diagram of example chip-scale atomic clock anti-spoofing system;

FIG. 2 is a block diagram of an example GNSS receiver;

FIG. 3 is a block diagram of an example chip-scale atomic clock;

FIG. 4 is a block diagram of an example control function;

FIG. 5 is a block diagram of an example discipline monitor function;

FIG. 6 is a block diagram of an example autocalibration monitor function; and

FIG. 7 is a block diagram of an example autocalibration function.

In accordance with common practice, the various described features are not drawn to scale but are drawn to emphasize specific features relevant to the example embodiments.

## DETAILED DESCRIPTION

In the following detailed description, reference is made to the accompanying drawings that form a part hereof, and in which are shown by way of illustration specific illustrative embodiments. However, it is to be understood that other embodiments may be utilized, and that logical, mechanical, and electrical changes may be made. Furthermore, the method presented in the drawing figures and the specification is not to be construed as limiting the order in which the individual steps may be performed. The following detailed description is, therefore, not to be taken in a limiting sense.

Some GNSS spoofers (for example, a simple repeater) can introduce time delay, and other GNSS spoofers can change time and position in arbitrary ways. In general, GNSS spoofing can change a GNSS receiver's estimate of position and time. For example, a 100 ns GPS time error introduced by spoofing gives approximately a 30 m position error.

Recently, people have used spoofing devices to affect the integrity and accuracy of GNSS measurements. Spoofing devices imitate the transmission of GNSS signals from the GNSS satellites and sometimes transmit the imitation signals at a higher power than the signals broadcast by the GNSS satellites. When the navigation system receives the spoofed signals from the spoofing device, the navigation system may use the information in the spoofed signals instead of the information in the signals from the GNSS satellites. When a spoofing device has fooled the navigation system into using the spoofed signals instead of the actual GNSS signals, the spoofing device may provide misleading information to the navigation system. The misleading information may cause the navigation system to believe the GNSS satellites are at an alternate satellite position instead of the true satellite position. When the navigation system receives the misleading information, the navigation system may calculate a spoofed Position, Velocity, and Time (PVT) solution that is significantly different (and potentially dangerous) from the desired estimated position.

In some examples, a device may first send signals to jam the reception of GNSS signals and then send spoofing signals that imitate the GNSS signals. For example, the device may attempt to jam the reception of GNSS signals such that the GNSS receiver cannot receive GNSS signals. After some time of transmitting the jamming signals, the device may send the spoofing signals that imitate the GNSS signals. As the GNSS receiver attempts to receive the GNSS signals, the GNSS receiver may receive the spoofed signals from the device instead of the actual GNSS signals from the GNSS satellites, and the navigation system may calculate a spoofed PVT solution that is significantly different (and potentially dangerous) from the desired estimated position.

Some prior techniques describe using a chip-scale atomic clock (CSAC) to provide time estimates when the GPS timing signal is suspect and using a proportional integral controller to output discipline values to discipline the CSAC. Unfortunately, when implementing a proportional integral controller for this purpose, it has been found that the proportional integral controller does not provide sufficient disciplining of the CSAC for long-term accuracy and GNSS spoofing detection. Further, the time required to discipline for providing long-term accuracy is excessive when using a proportional integral controller as discussed above.

The techniques described herein provide systems and methods for disciplining a chip-scale atomic clock using a Kalman filter as well as monitoring, detecting, and responding to time corruptions in the GNSS receiver. The techniques described herein prevent continued degradation of time estimates, minimize time drift rate of the chip-scale atomic clock while unaided by GNSS, and allow for improved long-term accuracy for time estimates. Also, the techniques described herein significantly reduce the convergence time for disciplining a chip-scale atomic clock as well as improving the long-term accuracy of the chip-scale atomic clock compared to previous techniques.

FIG. 1 is a block diagram of example chip-scale atomic clock anti-spoofing system 100. In the examples shown in FIG. 1, the chip-scale atomic clock anti-spoofing system 100 includes a GNSS receiver 102, a chip-scale atomic clock 104, and a processing system 106. In the example shown in FIG. 1, the processing system 106 is configured to implement a control function 108, a discipline monitor function 110, an autocalibration monitor function 112, and an autocalibration function 114. It should be understood that the particular components and configuration of the components of the chip-scale atomic clock anti-spoofing system 100 can vary depending on requirements.

In the example shown in FIG. 1, the chip-scale atomic clock anti-spoofing system 100 is configured to provide information to a larger system communicatively coupled to the chip-scale atomic clock anti-spoofing system 100. In some examples, the information includes, but is not limited to, a time signal, a spoofing detection signal, and/or a discipline OK signal (discussed below). In some examples, the larger system is a navigation system or another system that uses precision timing.

The GNSS receiver 102, and the chip-scale atomic clock anti-spoofing system 100 generally, may be mounted on or in a vehicle and configured to provide position and time information to the vehicle, for example an aircraft. Although an aircraft is referred to throughout the disclosure, this is merely for pedagogical reasons and not intended to be limiting in any sense. Instead, the term "vehicle" is intended to convey the ordinary meaning as understood by one having skill in the art, which includes, but not limited to, airborne vehicles, space vehicles, water borne ships, and other types of vehicles. In some examples, the chip-scale atomic clock anti-spoofing system 100 may be carried by a person, mounted on a trailer, or mounted on a projectile.

In the example shown in FIG. 1, the GNSS receiver 102 is communicatively coupled to the chip-scale atomic clock 104 and the processing system 106. The GNSS receiver 102 configured to be coupled to one or more antennas 101 configured to receive GNSS signals from satellites of one or more GNSS constellations (such as Global Positioning System (GPS), GLONASS, Galileo, BeiDou, etc.). In some examples, the GNSS receiver 102 is specifically configured to receive GPS signals from GPS satellites.

FIG. 2 is a block diagram of an example GNSS receiver 102. As shown in FIG. 2, the GNSS receiver 102 includes GNSS processing circuitry 202, and the GNSS receiver 102 is configured to receive GNSS satellite signals 204 from the one or more antennas 101 and perform GNSS processing functionality on the GNSS satellite signals. In the example shown in FIG. 2, the GNSS receiver 102 is configured to output a GNSS one-pulse-per-second signal (1PPS) signal 206, which is provided to the chip-scale atomic clock 104. In some examples, the GNSS 1PPS signal 206 is also provided to one or more other components of the chip-scale atomic clock anti-spoofing system 100 for reference or for use as a system time signal, for example.

In the example shown in FIG. 2, the GNSS receiver 102 is further configured to output a UTC time signal 208, which is used in relation to the GNSS 1PPS signal 206. In some examples, the UTC time signal 208 is a time stamp for the GNSS 1PPS signal 206.

In the example shown in FIG. 2, the GNSS receiver 102 is further configured to output checks and validity flags 210, which relate to the GNSS 1PPS signal 206 and the UTC time signal 208. In some examples, the check and validity flags 210 can include a Time Figure of Merit (TFOM), a number of satellites tracked, and/or a time uncertainty. It should be understood that other types of checks and validity flags could also be provided by the GNSS receiver 102 depending on the capabilities of the GNSS receiver 102 and the requirements of the chip-scale atomic clock anti-spoofing system 100.

In the example shown in FIG. 1, the chip-scale atomic clock 104 is communicatively coupled to the GNSS receiver 102 and the processing system 106. FIG. 3 is a block diagram of an example chip-scale atomic clock 104. The chip-scale atomic clock 104 includes CSAC components 301 configured to generate and output a CSAC 1PPS signal 302, which is provided to the processing system 106.

In the example shown in FIG. 3, the chip-scale atomic clock 104 is configured to receive the GNSS 1PPS signal 206 from the GNSS receiver 102. The chip-scale atomic clock 104 is configured to determine a phase difference 304 between the GNSS 1PPS signal 206 and the CSAC 1PPS signal 302. In the example shown in FIG. 3, the CSAC components 301 of the chip-scale atomic clock 104 includes a built-in CSAC phase meter configured to determine the phase difference 304. In some examples, the phase meter provides a resolution of 1 nanosecond. The chip-scale atomic clock 104 is configured to output the phase difference 304, which is provided to the processing system 106. In particular, the phase difference 304 is provided to the control function 108 and the discipline monitor function 110 implemented by the processing system 106.

In the example shown in FIG. 3, the chip-scale atomic clock 104 is configured to receive a coarse synch command 408 from the processing system 106 and particularly the control function 108 implemented by the processing system 106. The chip-scale atomic clock 104 is configured to discipline its frequency and/or phase based on the coarse synch command 408. The coarse synch command 408 will be discussed in more detail with reference to the control function 108 and FIG. 4 below.

In the example shown in FIG. 3, the chip-scale atomic clock 104 is also configured to receive a steer command 410 from the processing system 106 and particularly from the control function 108 implemented by the processing system 106. The chip-scale atomic clock 104 is configured to discipline its frequency and/or phase based on the steer command 410. In the examples described herein, the chip-scale atomic clock 104 is disciplined in a finer way by the steer command 410 from the control function 108 compared to the coarse synch command 408.

In the examples described herein, the processing system 106 is configured to receive the phase difference 304 from the chip-scale atomic clock 104. As discussed above, the processing system 106 is configured to implement the control function 108, the discipline monitor function 110, the autocalibration monitor function 112, and the autocalibration function 114. While a single processing system 106 is configured to implement all of the functions in the example chip-scale atomic clock anti-spoofing system 100 of FIG. 1, it should be understood that more than one processing system can be included in the chip-scale atomic clock anti-spoofing system 100 and be configured to implement one or more of the functions described herein.

FIG. 4 is a block diagram of an example control function 108. In the example shown in FIG. 4, the control function 108 includes a Kalman filter 402. In some examples, the Kalman filter 402 models two states, where the first state is an estimate of phase error of the chip-scale atomic clock 104 and a second state is an estimate of frequency error of the chip-scale atomic clock 104. The control function 108 is configured to receive the phase difference 304 from the chip-scale atomic clock 104 and to discipline the chip-scale atomic clock 104 using coarse synch commands 408 and steer commands 410, which are discussed in more detail below.

In the example shown in FIG. 4, various parameters 406 are used to tune and initialize the Kalman filter 402 depending on the hardware components that are included in the chip-scale atomic clock anti-spoofing system 100 (for example, the type of GNSS receiver 102 and the type of chip-scale atomic clock 104). In some examples, the various parameters 406 can include a frequency of operation of the Kalman filter 402, an initial phase uncertainty value for the Kalman filter 402, an initial frequency uncertainty for the Kalman filter 402, a reset parameter, a phase jitter parameter, a temperature compensation for the chip-scale atomic clock 104, phase stabilization window parameters, an indication if a recovery state is allowed, and/or an autocoast parameter. It should be understood that other parameters could also be provided to the Kalman filter 402 for initialization or tuning.

In the example shown in FIG. 4, the control function 108 is configured to output the frequency error signal 414 and the frequency uncertainty signal 412. The frequency error signal 414 is indicative of the frequency error state of the Kalman filter 402, and the frequency uncertainty signal 412 is indicative of the uncertainty of the frequency error state of the Kalman filter 402. In some examples, the frequency error signal 414 is provided to the discipline monitor function 110 and the frequency uncertainty signal 412 is provided to the autocalibration monitor function 112.

In some examples, the control function 108 is further configured to output a phase error signal and a phase uncertainty signal (not shown). In such examples, the phase error signal is indicative of the phase error state of the Kalman filter 402, and the phase uncertainty signal is indicative of the uncertainty of the phase error state of the Kalman filter 402.

In the example shown in FIG. 4, the control function 108 includes state control logic 404 that is configured to control the transition between six states of operation.

The first state of operation is an initialization state. In the initialization state, the variables and state machine for the Kalman filter 402 are initialized.

The second state of operation is an initial phase stabilization state, which follows the initialization state. In the initial phase stabilization state, the control function 108 is configured to provide coarse synch commands 408 to the chip-scale atomic clock 104 in order to accelerate the disciplining convergence. In some examples, the coarse synch command 408 includes a coarse phase and/or frequency adjustment based on the initial phase difference 304 output by the chip-scale atomic clock 104. In some examples, the corrections in the coarse synch command 408 include phase and/or frequency corrections that correspond to a percentage of the initial phase difference 304 output by the chip-scale atomic clock 104. For example, if the initial phase difference 304 is 100 nanoseconds, the coarse synch command 408 can provide corrections in ten percent increments to the chip-scale atomic clock 104. In some examples, the initial phase stabilization state is implemented for a predetermined period of time or until the phase difference 304 output by the chip-scale atomic clock 104 falls below a configurable threshold value after correction using coarse synch commands 408 from the control function 108.

The third state of operation is a disciplining state, which follows the initial phase stabilization state. In the disciplining state, the control function 108 is configured to continuously provide the steer commands 410 to refine the phase error estimate by the chip-scale atomic clock 104. In general, the steer commands 410 provide finer control of the chip-scale atomic clock 104 compared to the coarse synch commands 408 from the control function 108. Over time, the disciplining process effectively synchronizes the CSAC 1PPS signal 302 to the GNSS 1PPS signal 206 such that the phase difference 304 is relatively small and well within operational parameters. In some examples, the disciplining state is implemented until a fault is detected and the control function 108 receives a fault detection flag 506 from the discipline monitor function 110 as discussed below.

In some examples, the steer command 410 is an output of the Kalman filter 402 and can be represented as:

$$steer = FBgain * KF\ X(1) + (KF\ X(2))$$

where X(1) and X(2) are the phase error state and frequency error state of the Kalman filter 402, respectively, and FBgain is a feedback control gain that controls the intensity of the steer command. In some examples, the FBgain value is determined using a gain function (for example, a proportional gain) that determines a weight to apply for the steer command 410 based on the magnitude of the phase difference 304, the rate of correction of the phase difference 304 over time, or other factors to fine tune the disciplining of the chip-scale atomic clock 104. In some examples, the formula for the steer command 410 can be used for the coarse synch command 408 as well. However, in such examples, the FBgain is reduced for the steer command 410 during the disciplining state compared to the initial phase stabilization state in order to enable small changes in the GNSS 1PPS signal 206 to be sensed by the in-built phase meter of the chip-scale atomic clock 104.

In some examples, the disciplining provided using the steer command 410 is small enough such that the phase difference 304 stays within the threshold used for GNSS spoofing detection (discussed below) and provides sufficient feedback to the chip-scale atomic clock 104 as to allow small phase differences to be sensed and monitored. The chip-scale atomic clock 104 is constantly synching the CSAC 1PPS signal 302 to the GNSS 1PPS signal 206, so large feedback via the steer command 410 would result in smaller changes in the GPS 1PPS signal 206 to go unnoticed, which would result in the monitor to only be capable of detecting large phase errors.

In some examples, during the initialization state, the initial phase stabilization state, and the disciplining state, the chip-scale atomic clock anti-spoofing system 100 is configured to use the GNSS 1PPS signal as the source for the overall system time signal. In some examples, after sufficient disciplining has occurred for the chip-scale atomic clock 104 (for example, when the discipline monitor function 110 sets the discipline OK flag 504), the chip-scale atomic clock anti-spoofing system 100 is configured to use the CSAC 1PPS signal 302 as the source for the overall system time signal. In such examples, the CSAC 1PPS signal 302 is still based on the GNSS 1PPS signal 206 in some sense because the chip-scale atomic clock 104 is still being disciplined using the Kalman filter 402.

The fourth state of operation is a reversion state, which is entered when a fault is detected. In some examples, the state control logic 404 is configured to transition to the reversion state in response to receiving a fault detection flag 506 from the discipline monitor function 110, which is discussed in more detail below. In the reversion state, the control function 108 is configured to correct for accumulated phase errors of the chip-scale atomic clock 104 that were caused by disciplining the chip-scale atomic clock 104 based on faulty GNSS 1PPS signals 206 (for example, due to GNSS spoofing) due to the inherent delay in detecting a fault condition.

In some examples, a steer history buffer is implemented and maintained with the last ninety steer commands 410 that were sent to the chip-scale atomic clock 104, which for steer commands 410 provided at 1 Hz frequency would include a record of the last ninety seconds of steer commands 410. It should be understood that the particular number of recent steer commands 410 that are maintained in the steer history buffer can be different than ninety and the number can be configurable based, for example, on an amount of memory available or other factors.

In some examples, the steer history buffer is segregated between a "pre-fault section" that contains the oldest steer commands 410 assumed to be pre-fault and another section that contains the steer commands 410 assumed to have steered the chip-scale atomic clock 104 while in fault. When a fault is detected by the discipline monitor function 110, the control function 108 is configured to compute an average of the steer commands 410 in the "pre-fault section" and determine how much fault accumulation has been introduced to the chip-scale atomic clock 104, which is referred to as the accumulated fault steer.

In some examples, the accumulated fault steer is sent to the chip-scale atomic clock 104 as a steer command 410 to remove any absorbed errors from the fault in order to revert the chip-scale atomic clock 104 back to an earlier state prior to when the phase errors due to faulty GNSS 1PPS signals 206 started to accumulate. Once the accumulated fault steer is removed, the control function 108 is configured to output steer commands 410 that correspond to the average pre-fault steer command 410. In this way, the phase drift of the CSAC 1PPS signal 302 output by the chip-scale atomic clock 104 can be minimized and its long-term accuracy is improved for the coasting state.

The fifth state of operation is a coasting state, which is entered after a fault is detected and after the reversion state, if included. In the coasting state, the chip-scale atomic clock 104 is free running in an open loop manner and ceases to be disciplined based on the GNSS 1PPS signal 206 of the GNSS receiver 102 by the control function 108. In some examples, the coasting state is only entered after a discipline OK flag 504, which is discussed further below, has been received from the discipline monitor function 110.

In some examples, the chip-scale atomic clock anti-spoofing system 100 is configured to stop using the GNSS 1PPS signal 206 (or a CSAC 1PPS signal 302 that is based on the GNSS 1PPS signal 206) for the overall system time signal during the coasting state. The chip-scale atomic clock anti-spoofing system 100 switches to using the CSAC 1PPS signal 302, which is not influenced by the GNSS 1PPS signal 206 as it is not being disciplined using the Kalman filter 402.

The chip-scale atomic clock 104 is configured to operate in an open loop manner in order to prevent the CSAC 1PPS signal 302 from being corrupted by GNSS spoofing. In general, the chip-scale atomic clock 104 can operate in an open loop manner and within tolerable error bounds for a few hours if it has been disciplined adequately. In some examples, the chip-scale atomic clock anti-spoofing system 100 is configured to operate in the coasting state for the remainder of the mission if GNSS spoofing is detected.

In some examples, the chip-scale atomic clock anti-spoofing system 100 is configured to provide a stable UTC time of day using the chip-scale atomic clock 104 that has been disciplined as described above. For example, if the GNSS receiver 102 provides the UTC time signal 208 and the chip-scale atomic clock 104 is disciplined such that it is synchronized with the GNSS receiver 102, then the UTC time is known from the UTC time signal 208 and the chip-scale atomic clock anti-spoofing system 100 can use the CSAC 1PPS signal 302 in order to determine the UTC time of day with sufficient accuracy and stability even during the coasting state.

In other examples, a sixth state of operation is a recovery state where the disciplining of the chip-scale atomic clock 104 can resume if certain criteria is met. In some examples, the control function 108 is configured to output a reset signal 416 for phase error recovery after a fault is detected. In some examples, the criteria to be met in order for the recovery state to be entered and disciplining to be resumed includes the GNSS receiver 102 showing an uncorrupted, healthy 1PPS signal. For example, the phase difference 304 is within 2-sigma (or other application-specific parameter) of the frequency uncertainty signal 412 of the Kalman filter 402. In some examples, the criteria also includes that no jamming of the GNSS receiver 102 is detected, more than four satellites are being tracked, and/or the chip-scale atomic clock 104 has to be in a healthy state (for example, no BIT failures). It should be understood that different combinations of the above criteria or other criteria could also be used to determine when the control function 108 can enter the recovery state.

FIG. 5 is a block diagram of an example discipline monitor function 110. In the example shown in FIG. 5, the discipline monitor function 110 is configured to receive the phase difference 304 from the chip-scale atomic clock 104 and the frequency uncertainty signal 412 from the control function 108. In the example shown in FIG. 5, various parameters 502 are used to tune and initialize parameters and provide settings for the discipline monitor function 110. In some examples, the various parameters 502 can include parameters for a phase stabilization window, a time fault detection limit (for example, a threshold for fault detection), and/or a phase fault window. It should be understood that other parameters could also be provided to the discipline monitor function 110 for tuning, initialization, or settings.

The discipline monitor function 110 is configured to determine whether the disciplining of the chip-scale atomic clock 104 has been achieved to meet the specified coasting performance requirements and output a discipline OK flag 504 in response to a determination that the CSAC 1PPS signal 302 chip-scale atomic clock 104 and the GNSS 1PPS signal 206 are sufficiently in synch. In some examples, the discipline OK flag 504 indicates to the control function 108 that the time determined by the chip-scale atomic clock 104 is sufficiently synched with the time determined by the GNSS receiver 102 such that the control function 108 can switch to the coasting state and still operate within the parameters of operation defined for the chip-scale atomic clock anti-spoofing system 100.

In some examples, two things need to be satisfied for the discipline OK flag 504 to be set by the discipline monitor function 110. First, the frequency uncertainty signal 412 needs to be small enough to meet a specified coasting performance goal, which is configurable and determined based on parameters for the performance of the chip-scale atomic clock anti-spoofing system 100. Second, the raw phase error (for example, phase difference 304), which is being monitored for faults (for example, GNSS spoofing), is stable and running within a detection threshold.

In some examples, a fixed threshold is used for the GNSS spoofing detection, and the threshold is a function of the noise characteristics for the GNSS receiver 102, which are different depending on the type of GNSS receiver 102. In some examples, the GNSS receiver 102 is a Selective Availability Anti-Spoofing Module (SAASM) receiver. In other examples, the GNSS receiver 102 is a Military (M code) receiver.

In some examples, one or more moving thresholds can also be used by the discipline monitor function 110 as a detection threshold for GNSS spoofing detection. In such examples, the one or more moving thresholds are based on the frequency uncertainty signal 412 and/or a phase uncertainty signal from the frequency uncertainty signal 412. These moving thresholds adapt to the system dynamics and component characteristics.

If the phase difference 304 exceeds the fixed threshold or is outside the bounds defined by the moving threshold, then the discipline monitor function 110 is configured to set the fault detection flag 506, which is provided to the control function 108. In some examples, the discipline monitor function 110 is configured to adapt the discipline OK flag 504 such that the discipline OK flag 504 is no longer set in response to the fault detection flag 506 being set.

FIG. 6 is a block diagram of an example autocalibration monitor function 112. In the example shown in FIG. 6, the autocalibration monitor function 112 is configured to receive the frequency error signal 414 and the reset signal 416 from the control function 108. In the example shown in FIG. 6, various parameters 602 are used to tune and initialize parameters and provide settings for the autocalibration monitor function 112. In some examples, the various parameters 602 can include parameters for an autocalibration window and/or an autocalibration threshold. It should be understood that other parameters could also be provided to the autocalibration monitor function 112 for tuning, initialization, or settings.

The autocalibration monitor function 112 is configured to use a moving window test on the running average of the frequency error signal 414 in order to determine an autocalibration frequency estimate 606. In some examples, the autocalibration monitor function 112 determines a running average of the raw frequency state from the Kalman filter 402.

The autocalibration monitor function 112 is also configured to determine whether the autocalibration frequency estimate 606 is stable enough such that it can be used in a calibration estimate, which can be used for faster coarse adjustment of new disciplining activity if sufficient information is learned from previous disciplining activity. In some examples, the autocalibration monitor function 112 is configured to determine whether the autocalibration frequency estimate 606 is within a moving window threshold. In some examples, the moving window threshold is based on a CSAC response time characterization, uncertainty levels, and/or time to complete the disciplining of the chip-scale atomic clock 104 from previous disciplining activities.

If the autocalibration frequency estimate 606 is outside the moving window threshold, then the autocalibration monitor function 112 sets an autocalibration valid flag 604 to indicate that the autocalibration frequency estimate 606 is not valid. Conversely, if the autocalibration frequency estimate 606 is within the moving window threshold, then the autocalibration monitor function 112 sets the autocalibration valid flag 604 to indicate that the autocalibration frequency estimate 606 is valid. In some examples, the autocalibration valid flag 604 is also dependent on whether the reset signal 416 indicates that a resumption of disciplining of the chip-scale atomic clock 104 should occur.

FIG. 7 is a block diagram of an example autocalibration function 114. In the example shown in FIG. 7, the autocalibration function 114 is configured to receive the autocalibration valid flag 604 and the autocalibration frequency estimate 606 from the autocalibration monitor function 112. The purpose of the autocalibration function 114 is to track aging effects of the chip-scale atomic clock 104 frequency source and maintain the baseline frequency control signal value stored in non-volatile memory in the processing system 106. That is, the value of the steer command signal 410 that is expected to set the correct steady-state operating frequency of the frequency source in the chip-scale atomic clock 104. This serves as the starting point for the steer command signal 410, not "zero". Initially the baseline calibration signal is determined during factory test and calibration of the system. After factory initialization, the autocalibration function 114 is configured to update the calibration estimate based on the autocalibration frequency estimate 606 if the autocalibration valid flag 604 indicates that the autocalibration frequency estimate 606 is valid. The updated baseline calibration is generally calculated as the sum of a small fraction of the current autocalibration frequency estimate 606 and the remaining larger fraction of the currently stored calibration estimate. This updated value then becomes the new baseline. In some examples, the autocalibration function 114 is configured to self-initialize using the first autocalibration frequency estimate 606 as the calibration estimate directly and completely replacing the need for initial factory calibration. In the example shown in FIG. 7, the autocalibration function 114 is configured to output an autocalibration signal 702 for storage and future use as the initial steer command 410 from the control function 108.

By using the techniques described herein, and particularly the use of the coarse synch and steer commands, the time required for disciplining the CSAC has been found to be reduced from one hour using prior techniques to less than ten minutes. Further, using the combination of the Kalman filter, disciplining, and detection allows for earlier GNSS spoofing detection compared to currently available techniques. Furthermore, the techniques described herein enable providing a stable UTC time of day using the CSAC during poor GNSS operating conditions (for example, when GNSS spoofing is detected).

In various aspects, system elements, method steps, or examples described throughout this disclosure (such as the system 100 or components thereof, for example) may be implemented on one or more computer systems including a central processing unit (CPU), graphics processing unit (GPU), field programmable gate array (FPGA), application specific integrated circuit (ASIC) and/or similar devices comprising hardware executing code to realize those elements, processes, or examples, said code stored on a non-transient data storage device. These devices include or function with software programs, firmware, or other computer readable instructions for carrying out various methods, process tasks, calculations, and control functions.

These instructions are typically stored on any appropriate computer readable medium used for storage of computer readable instructions or data structures. The computer readable medium can be implemented as any available media that can be accessed by a general purpose or special purpose computer or processor, or any programmable logic device. Suitable processor-readable media may include storage or memory media such as magnetic or optical media. For example, storage or memory media may include conventional hard disks, Compact Disk-Read Only Memory (CD-ROM), volatile or non-volatile media such as Random Access Memory (RAM) (including, but not limited to, Synchronous Dynamic Random Access Memory (SDRAM), Double Data Rate (DDR) RAM, RAMBUS Dynamic RAM (RDRAM), Static RAM (SRAM), etc.), Read Only Memory (ROM), Electrically Erasable Programmable ROM (EEPROM), and flash memory, etc.

The methods and techniques described here may be implemented, in part, in digital electronic circuitry, or with a programmable processor (for example, a special-purpose processor or a general-purpose processor such as a computer) firmware, software, or in combinations of them. Apparatus embodying these techniques may include appropriate input and output devices, a programmable processor, and a storage medium tangibly embodying program instructions for execution by the programmable processor. A process embodying these techniques may be performed by a programmable processor executing a program of instructions to perform desired functions by operating on input data and generating appropriate output. The techniques may advantageously be implemented in one or more programs that are executable on a programmable system including at least one programmable processor coupled to receive data and instructions from, and to transmit data and instructions to, a data storage system, at least one input device, and at least one output device. Generally, a processor will receive instructions and data from a read-only memory and/or a random access memory. Storage devices suitable for tangibly embodying computer program instructions and data include all forms of non-volatile memory, including by way of example semiconductor memory devices, such as EPROM, EEPROM, and flash memory devices; magnetic disks such as internal hard disks and removable disks; magneto-optical disks; and DVD disks. Any of the foregoing may be supplemented by, or incorporated in, specially-designed application-specific integrated circuits (ASICs).

EXAMPLE EMBODIMENTS

Example 1 includes a system, comprising: a Global Navigation Satellite System (GNSS) receiver configured to be coupled to an antenna, wherein the GNSS receiver is configured to receive GNSS signals from GNSS satellites via the antenna and to output a GNSS 1PPS signal; a chip-scale atomic clock configured to output a chip-scale atomic clock 1PPS signal and to determine a difference between a phase of the GNSS 1PPS signal and a phase of the chip-scale atomic clock 1PPS signal; and at least one processor communicatively coupled to the chip-scale atomic clock, wherein the at least one processor is configured to: receive the difference between the phase of the GNSS 1PPS signal and the phase of the chip-scale atomic clock 1PPS signal; implement a Kalman filter configured to determine a phase error estimate for the chip-scale atomic clock and a frequency error estimate for the chip-scale atomic clock based on the difference between the phase of the GNSS 1PPS signal and the phase of the chip-scale atomic clock 1PPS signal; discipline, with the Kalman filter, the chip-scale atomic clock using coarse synchronization commands and fine steer commands that are based on the phase error estimate for the chip-scale atomic clock and the frequency error estimate for the chip-scale atomic clock; and detect GNSS spoofing based on the difference between the phase of the GNSS 1PPS signal and the phase of the chip-scale atomic clock 1PPS signal.

Example 2 includes the system of Example 1, wherein the coarse synchronization commands include a coarse phase adjustment and/or a coarse frequency adjustment based on an initial phase difference between the GNSS 1PPS signal and the chip-scale atomic clock 1PPS signal.

Example 3 includes the system of any of Examples 1-2, wherein the at least one processor is configured to discipline, with the Kalman filter, the chip-scale atomic clock using the coarse synchronization commands until the difference between the phase of the GNSS 1PPS signal and the phase of the chip-scale atomic clock 1PPS signal is below a threshold.

Example 4 includes the system of any of Examples 1-3, wherein the fine steer commands include a fine phase adjustment and/or a fine frequency adjustment, wherein a weight applied to the fine steer commands is determined based on a magnitude of the difference between the phase of the GNSS 1PPS signal and the phase of the chip-scale atomic clock 1PPS signal and/or a rate of correction of the difference between the phase of the GNSS 1PPS signal and the phase of the chip-scale atomic clock 1PPS signal over time.

Example 5 includes the system of any of Examples 1-4, wherein the at least one processor is configured to discipline, with the Kalman filter, the chip-scale atomic clock using the fine steer commands until a fault with the GNSS receiver is detected.

Example 6 includes the system of any of Examples 1-5, wherein the system is configured to maintain a steer history buffer that includes a record of fine steer commands used to discipline the chip-scale atomic clock, wherein, in response to detecting GNSS spoofing, the at least one processor is configured to revert the chip-scale atomic clock back to an earlier state prior to when phase errors due to faulty GNSS 1PPS signals started to accumulate based on the steer history buffer.

Example 7 includes the system of any of Examples 1-6, wherein the at least one processor is further configured to stop disciplining the chip-scale atomic clock in response to detecting GNSS spoofing, wherein the chip-scale atomic clock is configured to operate in a coasting state when the chip-scale atomic clock is not being disciplined.

Example 8 includes the system of Example 7, wherein, after stopping the disciplining the chip-scale atomic clock in response to detecting GNSS spoofing, the at least one processor is configured to resume disciplining the chip-scale atomic clock using the fine steer commands in response to: the difference between the phase of the GNSS 1PPS signal and the phase of the chip-scale atomic clock 1PPS signal being within a specified range of a frequency uncertainty signal of the Kalman filter; no j amming of the GNSS receiver being detected; and more than four GNSS satellites being tracked.

Example 9 includes the system of any of Examples 1-8, wherein the at least one processor is further configured to provide an indication that the chip-scale atomic clock has been sufficiently disciplined in order to enter a coasting state and operate within parameters of operation for the system in response to: a frequency uncertainty signal from the Kalman filter being below a threshold that corresponds to specified coasting performance requirements for the chip-scale atomic clock; and the difference between the phase of the GNSS 1PPS signal and the phase of the chip-scale atomic clock 1PPS signal being within a threshold for detection of GNSS spoofing.

Example 10 includes the system of any of Examples 1-9, wherein the at least one processor is configured to detect GNSS spoofing based on the difference between the phase of the GNSS 1PPS signal from the phase of the chip-scale atomic clock 1PPS signal by: determining whether the difference between the phase of the GNSS 1PPS signal and the phase of the chip-scale atomic clock 1PPS signal exceeds a fixed threshold, wherein the fixed threshold is based on noise characteristics of the GNSS receiver; and/or determining whether the difference between the phase of the GNSS 1PPS signal and the phase of the chip-scale atomic clock 1PPS signal is outside bounds defined by a moving threshold, wherein the moving threshold is based on a frequency uncertainty signal and/or a phase uncertainty signal from the Kalman filter.

Example 11 includes the system of any of Examples 1-10, wherein the at least one processor is configured to: determine a frequency value that is expected to set a steady-state operating frequency of a frequency source in the chip-scale atomic clock based on a moving window test of a running average of a frequency error signal from the Kalman filter; and store the frequency value is non-volatile memory for future use as an initial steer command.

Example 12 includes the system of any of Examples 1-11, wherein the GNSS receiver is further configured to output a UTC time signal; wherein, in response to detecting GNSS spoofing, the system is configured to provide a UTC time of day based on the chip-scale atomic clock 1PPS signal and the UTC time signal.

Example 13 includes a method, comprising: receiving, from a chip-scale atomic clock, an indication of a difference between a phase of a Global Navigation Satellite System (GNSS) 1PPS signal output by a GNSS receiver and a phase of a chip-scale atomic clock 1PPS signal; determining, with a Kalman filter, a phase error estimate for the chip-scale atomic clock and a frequency error estimate for the chip-scale atomic clock based on the difference between the phase of a GNSS 1PPS signal output by the GNSS receiver and the phase of the chip-scale atomic clock 1PPS signal; disciplining, with the Kalman filter, the chip-scale atomic clock using coarse synchronization commands and fine steer commands, wherein the coarse synchronization commands and the fine steer commands are based on the phase error estimate for the chip-scale atomic clock and the frequency error estimate for the chip-scale atomic clock; and detecting GNSS spoofing based on the difference between the phase of the GNSS 1PPS signal and the phase of the chip-scale atomic clock 1PPS signal.

Example 14 includes the method of Example 13, wherein disciplining the chip-scale atomic clock using the coarse synchronization commands includes using a coarse phase adjustment and/or a coarse frequency adjustment that corresponds to a percentage of an initial phase difference between the GNSS 1PPS signal and the chip-scale atomic clock 1PPS signal.

Example 15 includes the method of any of Examples 13-14, wherein disciplining the chip-scale atomic clock using coarse synchronization commands and fine steer commands includes: disciplining the chip-scale atomic clock using the coarse synchronization commands from initialization of the chip-scale atomic clock until the difference between the phase of the GNSS 1PPS signal and the phase of the chip-scale atomic clock 1PPS signal is below a threshold; and disciplining the chip-scale atomic clock using the fine steer commands until a fault with the GNSS receiver is detected.

Example 16 includes the method of any of Examples 13-15, further comprising: maintaining a steer history buffer that includes a record of fine steer commands used to discipline the chip-scale atomic clock; and in response to detecting GNSS spoofing, reverting the chip-scale atomic clock back to an earlier state prior to when phase errors due to faulty GNSS 1PPS signals started to accumulate based on the steer history buffer.

Example 17 includes the method of any of Examples 13-16, wherein detecting GNSS spoofing based on the difference between the phase of the GNSS 1PPS signal and the phase of the chip-scale atomic clock 1PPS signal includes: determining whether the difference between the phase of the GNSS 1PPS signal and the phase of the chip-scale atomic clock 1PPS signal exceeds a fixed threshold, wherein the fixed threshold is based on noise characteristics of the GNSS receiver; and/or determining whether the difference between the phase of the GNSS 1PPS signal and the phase of the chip-scale atomic clock 1PPS signal is outside bounds defined by a moving threshold, wherein the moving threshold is based on a frequency uncertainty signal and/or a phase uncertainty signal from the Kalman filter.

Example 18 includes a processing system, comprising: one or more processors; and a memory storing instructions which, when executed by one or more processors, cause the one or more processors to: implement a Kalman filter configured to determine a phase error estimate for a chip-scale atomic clock and a frequency error estimate for the chip-scale atomic clock based on a difference between a phase of a Global Navigation Satellite System (GNSS) 1PPS signal output by a GNSS receiver and a phase of a chip-scale atomic clock 1PPS signal; discipline the chip-scale atomic clock using a coarse synchronization command and a fine steer command that are based on the phase error estimate for the chip-scale atomic clock and the frequency error estimate for the chip-scale atomic clock; and detect GNSS spoofing based on the difference between the phase of the GNSS 1PPS signal and the phase of the chip-scale atomic clock 1PPS signal.

Example 19 includes the processing system of Example 18, wherein the instructions, when executed by one or more processors, further cause the one or more processors to: maintain a steer history buffer that includes a record of fine steer commands used to discipline the chip-scale atomic clock; and in response to detecting GNSS spoofing, revert the chip-scale atomic clock back to an earlier state prior to when phase errors due to faulty GNSS 1PPS signals started to accumulate based on the steer history buffer.

Example 20 includes the processing system of any of Examples 18-19, wherein the instructions, when executed by one or more processors, cause the one or more processors to detect GNSS spoofing based on the difference between the phase of the GNSS 1PPS signal and the phase of the chip-scale atomic clock 1PPS signal by: determining whether the difference between the phase of the GNSS 1PPS signal and the phase of the chip-scale atomic clock 1PPS signal exceeds a fixed threshold, wherein the fixed threshold is based on noise characteristics of the GNSS receiver; and/or determining whether the difference between the phase of the GNSS 1PPS signal and the phase of the chip-scale atomic clock 1PPS signal is outside bounds defined by a moving threshold, wherein the moving threshold is based on a frequency uncertainty signal and/or a phase uncertainty signal.

Although specific embodiments have been illustrated and described herein, it will be appreciated by those of ordinary skill in the art that any arrangement, which is calculated to achieve the same purpose, may be substituted for the specific embodiments shown. Therefore, it is manifestly intended that this invention be limited only by the claims and the equivalents thereof.

## Claims

**1.** A system (100), comprising:

a Global Navigation Satellite System, GNSS, receiver (102) configured to be coupled to an antenna (101), wherein the GNSS receiver (102) is configured to receive GNSS signals from GNSS satellites via the antenna (101) and to output a GNSS 1PPS signal (206);

a chip-scale atomic clock (104) configured to output a chip-scale atomic clock 1PPS signal (302) and to determine a difference (304) between a phase of the GNSS 1PPS signal (206) and a phase of the chip-scale atomic clock 1PPS signal (302); and

at least one processor (106) communicatively coupled to the chip-scale atomic clock (104), wherein the at least one processor (106) is configured to:

receive the difference (304) between the phase of the GNSS 1PPS signal (206) and the phase of the chip-scale atomic clock 1PPS signal (302);

implement a Kalman filter (402) configured to determine a phase error estimate for the chip-scale atomic clock (104) and a frequency error estimate for the chip-scale atomic clock (104) based on the difference (304) between the phase of the GNSS 1PPS signal (206) and the phase of the chip-scale atomic clock 1PPS signal (302);

discipline, with the Kalman filter (402), the chip-scale atomic clock (104) using coarse synchronization commands (408) and fine steer commands (410) that are based on the phase error estimate for the chip-scale atomic clock (104) and the frequency error estimate for the chip-scale atomic clock (104); and

detect GNSS spoofing based on the difference (304) between the phase of the GNSS 1PPS signal (206) and the phase of the chip-scale atomic clock 1PPS signal (302).

2. The system (100) of claim 1, wherein the coarse synchronization commands (408) include a coarse phase adjustment and/or a coarse frequency adjustment based on an initial phase difference (304) between the GNSS 1PPS signal (206) and the chip-scale atomic clock 1PPS signal (302);
wherein the at least one processor (106) is configured to discipline, with the Kalman filter (402), the chip-scale atomic clock (104) using the coarse synchronization commands (408) until the difference (304) between the phase of the GNSS 1PPS signal (206) and the phase of the chip-scale atomic clock 1PPS signal (302) is below a threshold.

3. The system (100) of claim 1, wherein the fine steer commands (410) include a fine phase adjustment and/or a fine frequency adjustment, wherein a weight applied to the fine steer commands (410) is determined based on a magnitude of the difference (304) between the phase of the GNSS 1PPS signal (206) and the phase of the chip-scale atomic clock 1PPS signal (302) and/or a rate of correction of the difference (304) between the phase of the GNSS 1PPS signal (206) and the phase of the chip-scale atomic clock 1PPS signal (302) over time.

4. The system (100) of claim 1, wherein the at least one processor (106) is configured to discipline, with the Kalman filter (402), the chip-scale atomic clock (104) using the fine steer commands (410) until a fault with the GNSS receiver (102) is detected.

5. The system (100) of claim 1, wherein the system (100) is configured to maintain a steer history buffer that includes a record of fine steer commands (410) used to discipline the chip-scale atomic clock (104), wherein, in response to detecting GNSS spoofing, the at least one processor (106) is configured to revert the chip-scale atomic clock (104) back to an earlier state prior to when phase errors due to faulty GNSS 1PPS signal (206)s started to accumulate based on the steer history buffer.

6. The system (100) of claim 1, wherein the at least one processor (106) is further configured to stop disciplining the chip-scale atomic clock (104) in response to detecting GNSS spoofing, wherein the chip-scale atomic clock (104) is configured to operate in a coasting state when the chip-scale atomic clock (104) is not being disciplined;
wherein, after stopping the disciplining the chip-scale atomic clock (104) in response to detecting GNSS spoofing, the at least one processor (106) is configured to resume disciplining the chip-scale atomic clock (104) using the fine steer commands (410) in response to:

the difference (304) between the phase of the GNSS 1PPS signal (206) and the phase of the chip-scale atomic clock 1PPS signal (302) being within a specified range of a frequency uncertainty signal of the Kalman filter (402);
no jamming of the GNSS receiver (102) being detected; and
more than four GNSS satellites being tracked.

7. The system (100) of claim 1, wherein the at least one processor (106) is further configured to provide an indication that the chip-scale atomic clock (104) has been sufficiently disciplined in order to enter a coasting state and operate within parameters of operation for the system (100) in response to:

a frequency uncertainty signal from the Kalman filter (402) being below a threshold that corresponds to specified coasting performance requirements for the chip-scale atomic clock (104); and
the difference (304) between the phase of the GNSS 1PPS signal (206) and the phase of the chip-scale atomic clock 1PPS signal (302) being within a threshold for detection of GNSS spoofing.

8. The system (100) of claim 1, wherein the at least one processor (106) is configured to detect GNSS spoofing based on the difference (304) between the phase of the GNSS 1PPS signal (206) from the phase of the chip-scale atomic clock 1PPS signal (302) by:

determining whether the difference (304) between the phase of the GNSS 1PPS signal (206) and the phase of the chip-scale atomic clock 1PPS signal (302) exceeds a fixed threshold, wherein the fixed threshold is based on noise characteristics of the GNSS receiver (102); and/or
determining whether the difference (304) between the phase of the GNSS 1PPS signal (206) and the phase of the chip-scale atomic clock 1PPS signal (302) is outside bounds defined by a moving threshold, wherein the moving threshold is based on a frequency uncertainty signal and/or a phase uncertainty signal from the Kalman filter (402).

9. The system (100) of claim 1, wherein the at least one processor (106) is configured to:

determine a frequency value that is expected to set a steady-state operating frequency of a frequency source in the chip-scale atomic clock (104) based on a moving window test of a running average of a frequency error signal from the Kalman filter (402); and
store the frequency value is non-volatile memory for future use as an initial steer command.

**10.** The system (100) of claim 1, wherein the GNSS receiver (102) is further configured to output a UTC time signal;
wherein, in response to detecting GNSS spoofing, the system (100) is configured to provide a UTC time of day based on the chip-scale atomic clock 1PPS signal (302) and the UTC time signal.

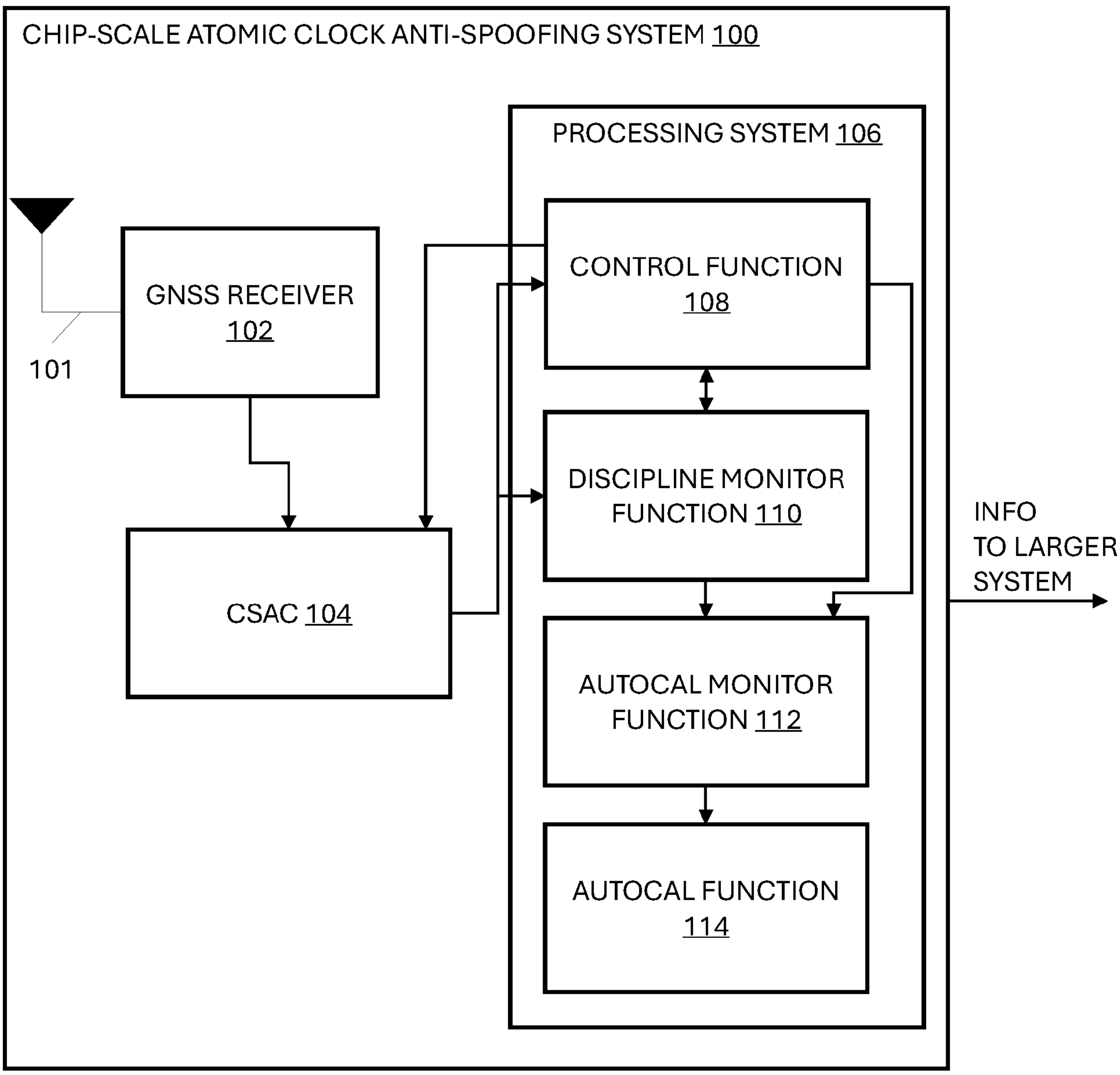
CHIP-SCALE ATOMIC CLOCK ANTI-SPOOFING SYSTEM 100
PROCESSING SYSTEM 106
GNSS RECEIVER 102
101
CONTROL FUNCTION 108
DISCIPLINE MONITOR FUNCTION 110
CSAC 104
AUTOCAL MONITOR FUNCTION 112
AUTOCAL FUNCTION 114
INFO TO LARGER SYSTEM

FIG. 1

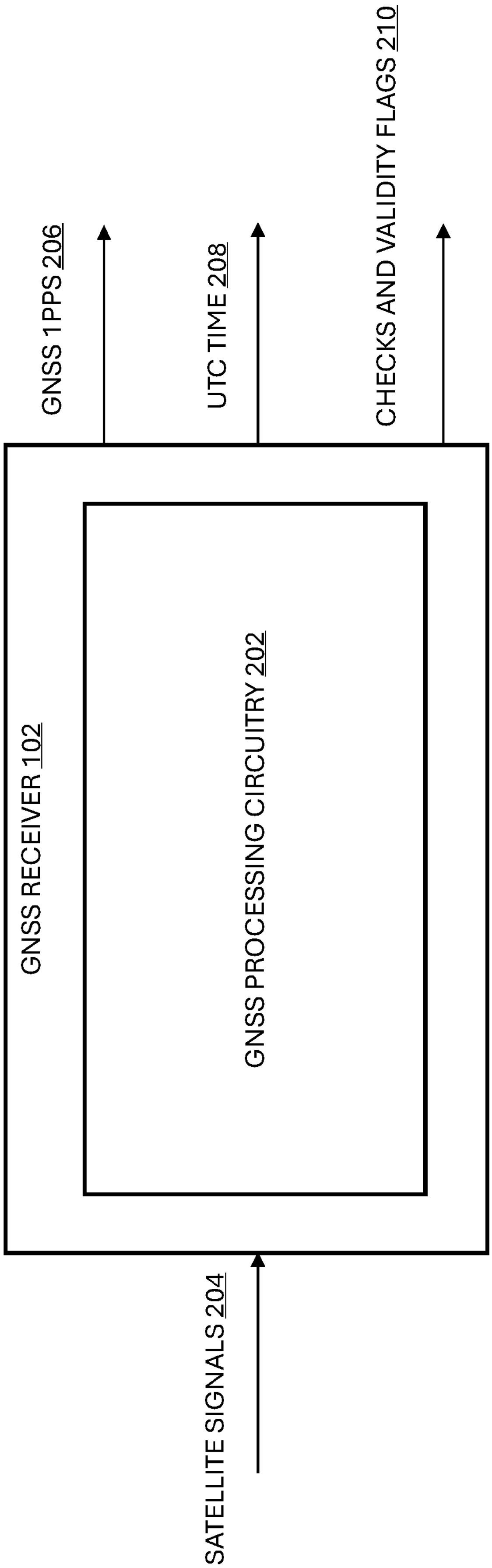
GNSS 1PPS 206
UTC TIME 208
CHECKS AND VALIDITY FLAGS 210
GNSS RECEIVER 102
GNSS PROCESSING CIRCUITRY 202
SATELLITE SIGNALS 204

FIG. 2

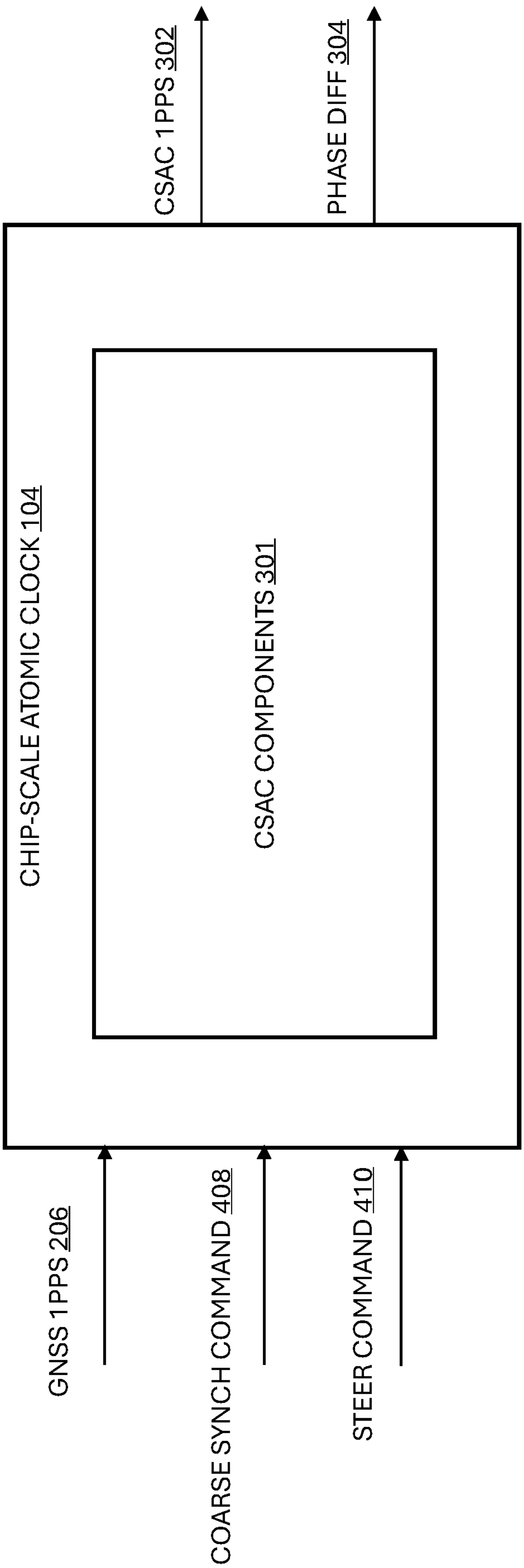
CSAC 1PPS 302
PHASE DIFF 304
CHIP-SCALE ATOMIC CLOCK 104
CSAC COMPONENTS 301
GNSS 1PPS 206
COARSE SYNCH COMMAND 408
STEER COMMAND 410

FIG. 3

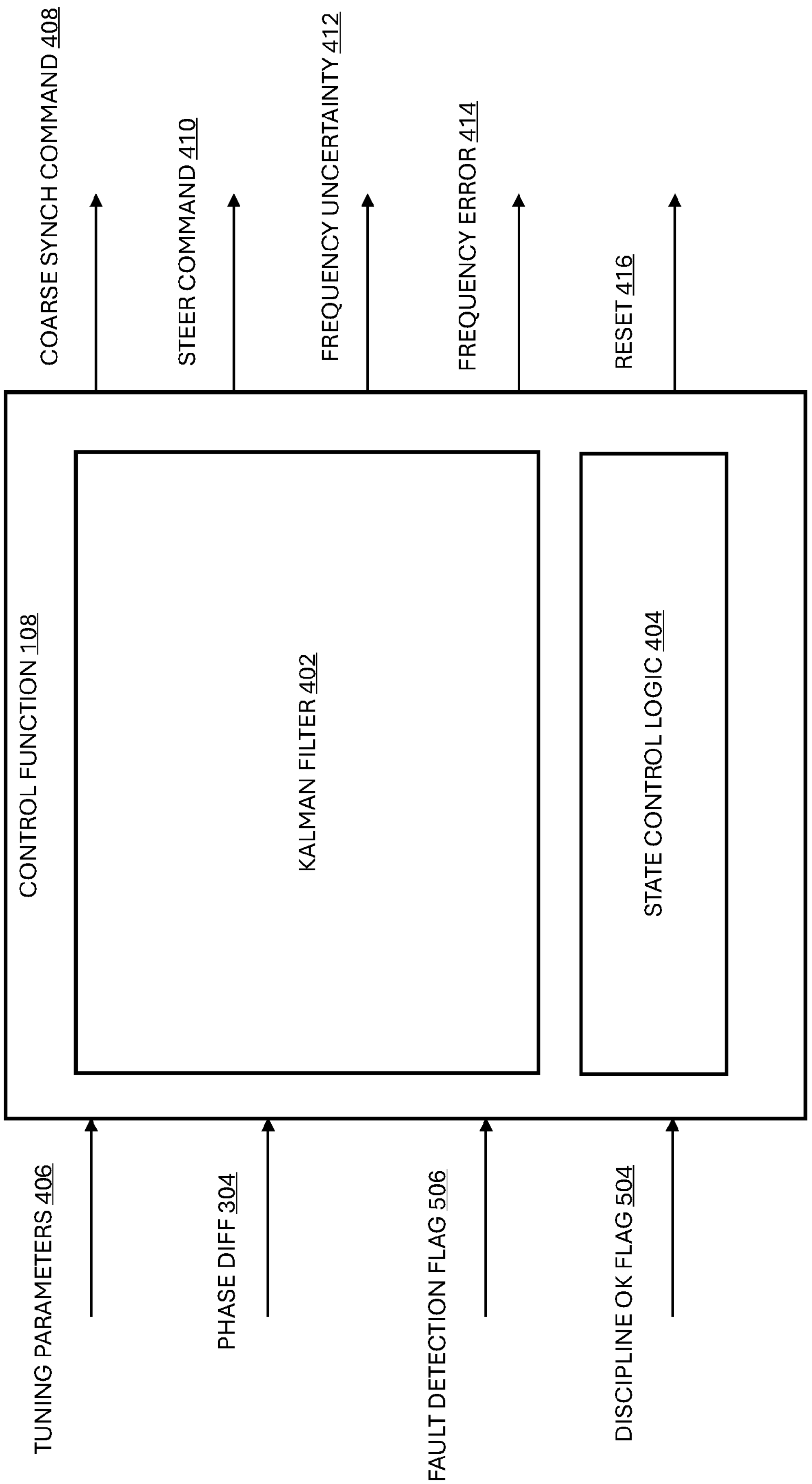
COARSE SYNCH COMMAND 408
STEER COMMAND 410
FREQUENCY UNCERTAINTY 412
FREQUENCY ERROR 414
RESET 416
CONTROL FUNCTION 108
KALMAN FILTER 402
STATE CONTROL LOGIC 404
TUNING PARAMETERS 406
PHASE DIFF 304
FAULT DETECTION FLAG 506
DISCIPLINE OK FLAG 504

FIG. 4

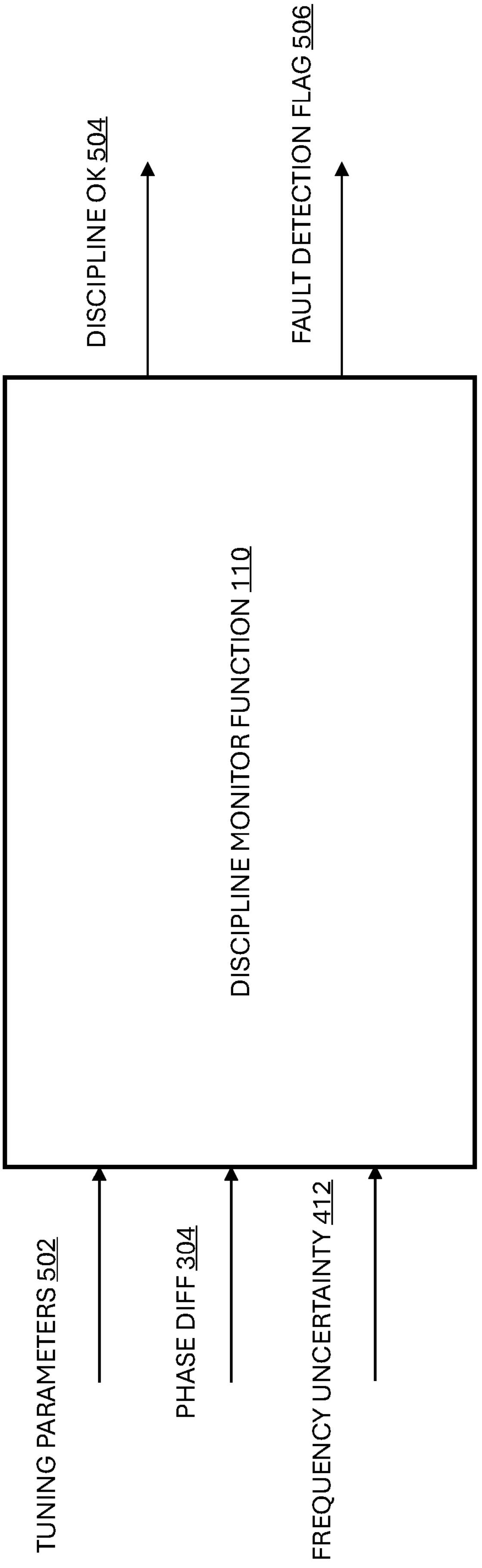
DISCIPLINE OK 504
FAULT DETECTION FLAG 506
DISCIPLINE MONITOR FUNCTION 110
TUNING PARAMETERS 502
PHASE DIFF 304
FREQUENCY UNCERTAINTY 412

FIG. 5

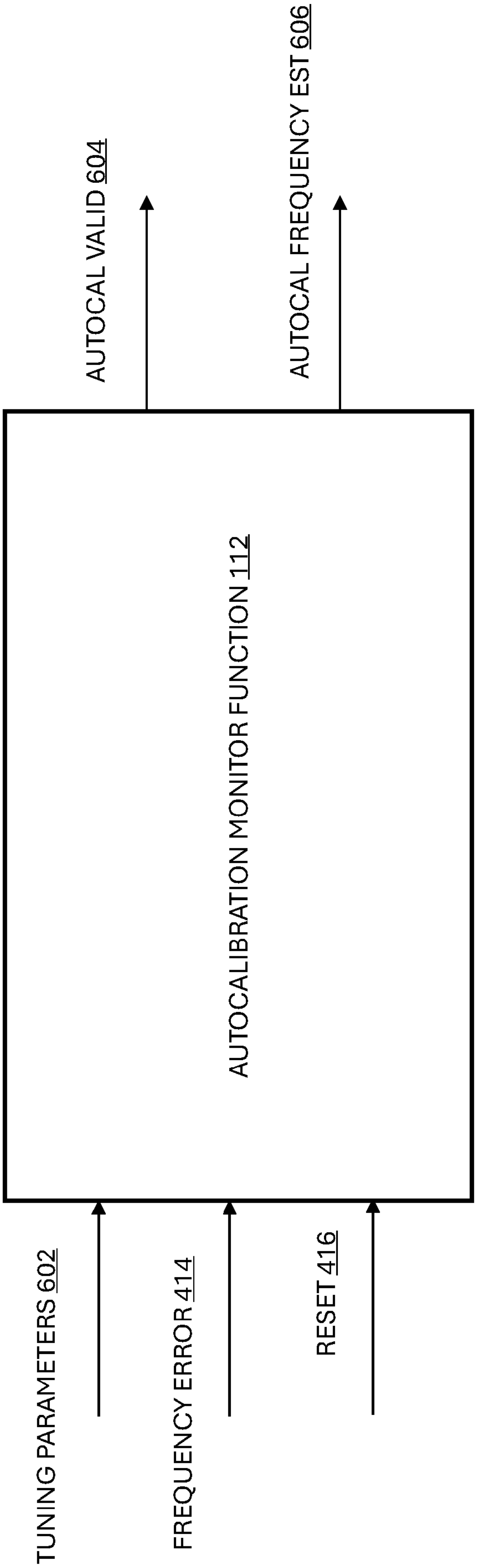
AUTOCAL VALID 604
AUTOCAL FREQUENCY EST 606
AUTOCALIBRATION MONITOR FUNCTION 112
TUNING PARAMETERS 602
FREQUENCY ERROR 414
RESET 416

FIG. 6

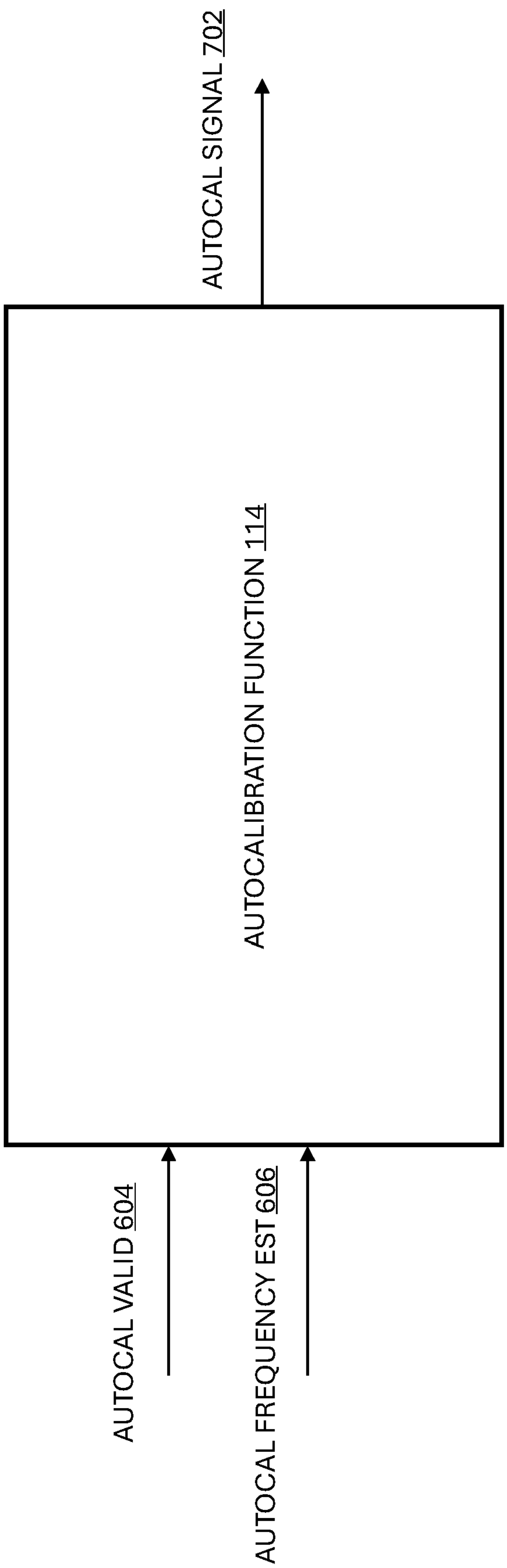
AUTOCAL SIGNAL 702
AUTOCALIBRATION FUNCTION 114
AUTOCAL VALID 604
AUTOCAL FREQUENCY EST 606

FIG. 7

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 63570482